(19)

**Europäisches Patentamt**
**European Patent Office**
**Office européen des brevets**

(11) **EP 3 086 338 A1**

(12) **EUROPEAN PATENT APPLICATION**
published in accordance with Art. 153(4) EPC

(43) Date of publication:
**26.10.2016 Bulletin 2016/43**

(51) Int Cl.:
*H01G 11/52* (2013.01)     *H01G 9/02* (2006.01)
*H01G 11/84* (2013.01)

(21) Application number: **13899671.5**

(22) Date of filing: **19.12.2013**

(86) International application number:
**PCT/JP2013/084075**

(87) International publication number:
**WO 2015/092898 (25.06.2015 Gazette 2015/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Nippon Kodoshi Corporation**
**Kochi-shi, Kochi 781-0395 (JP)**

(72) Inventors:
• **TANAKA Kosuke**
  **Kochi-shi**
  **Kochi 781-0395 (JP)**

• **FUJIMOTO Naoki**
  **Kochi-shi**
  **Kochi**
  **7810395 (JP)**

(74) Representative: **Müller-Boré & Partner**
**Patentanwälte PartG mbB**
**Friedenheimer Brücke 21**
**80639 München (DE)**

(54) **CAPACITOR SEPARATOR AND CAPACITOR**

(57)     There is provided a separator for a capacitor constituted by a porous film made of cellulose dissolved and regenerated without forming a cellulose derivative (A) and a fibrous component (B), and having excellent impedance characteristics and short-circuit resistance characteristics. The regenerated cellulose (A) is obtained by forming in a film form a cellulose solution made by dissolving cellulose in an amine oxide solvent, immersing the resulting cellulose solution in water or a poor solvent of the amine oxide solvent so as to coagulate and regenerate the cellulose, washing the regenerated cellulose with water to remove the amine oxide solvent, and drying the resulting cellulose. Moreover, the fibrous component (B) is one or more kinds of fibers selected from among a plant-based pulp, regenerated cellulose fiber, cellulose fiber, animal fiber, inorganic fiber, and synthetic fiber that are available as paper raw material.

**Description**

TECHNICAL FIELD

The present invention relates to a separator for a capacitor and a capacitor.

BACKGROUND ART

Generally, an aluminum electrolytic capacitor is constructed by interleaving a separator between an anode aluminum foil and a cathode aluminum foil and winding them into a capacitor element, impregnating the capacitor element with electrolyte, placing it in a case, then sealing it closed and aging it.
The capacitance of the capacitor is expressed by the following Formula 1.

$$C = \varepsilon S/d \ \ldots.. \ \text{Formula 1}$$

C: Capacitance (F)
$\varepsilon$: Dielectric constant (F/m) of dielectric
S: Surface area ($m^2$) of electrode
d: Distance (m) between electrodes

Of an aluminum electrolytic capacitor, the electrolyte impregnated in the separator becomes a real cathode through impregnation of the electrolyte in the separator within the capacitor element, and a very thin oxide film formed on the surface of the anode aluminum foil through electrolytic oxidation (chemical conversion) becomes a dielectric.
To attain a larger capacitance [C in Formula 1] of the aluminum electrolytic capacitor, it is effective to increase the surface area [S in Formula 1] of the electrodes and decrease the distance [d in Formula 1] between the electrodes since the dielectric constant [$\varepsilon$ in Formula 1] is dependent on type of dielectric. Since the oxide film can be formed having an arbitrary thickness and with high withstand voltage per unit thickness, the aluminum electrolytic capacitor has a smaller distance d between the electrodes than other types of capacitors such as ceramic capacitors and film capacitors.
Moreover, etching of the anode aluminum foil allows an approximately 20 to 120 times larger effective area than the apparent area, and therefore the area S of the electrodes is larger. As a result, realization of a smaller aluminum electrolytic capacitor having a larger capacitance than other types of capacitors is the greatest feature.
With a development of highly electronized automobile-related digital equipment, smaller sizing and energy efficiency have advanced, and there is a demand for down sizing, impedance reduction, and longer operating life of components to be mounted. There is a high demand for down-sizing of capacitors when the capacitance is the same, and capacitors with a larger capacitance when the size is the same. Since there are many cases where a plurality of the aluminum electrolytic capacitor is used in the same device, and reduction in the number of mounted capacitors is possible if capacity is increased with the same size, there is high demand for capacity enlargement along with down sizing. Further down sizing or capacity enlargement of the aluminum electrolytic capacitor is a common important development point in various fields.
Furthermore, there is always a demand in the market for impedance reduction and longer operating life. Many merits can be attained such as reduction in power loss due to impedance reduction, response to voltage reduction of semiconductor operating power and increase in operating speed, and improvement in frequency characteristics. Moreover, when a ripple current is applied to the electrolytic capacitor, self-heating occurs due to thermal loss. Low impedance will inhibit generation of heat due to the ripple current. Generation of heat in the electrolytic capacitor directly affects its operating life, and demand for impedance reduction is even higher since little generation of heat leads to a longer operating life.
The main role of the separator in the aluminum electrolytic capacitor is isolation of the electrode films and retaining the electrolyte. Electrical insulation is required for the material of the separator, and hydrophilic properties and lipophilic properties are required for retaining various types of electrolytes. Cellulose has these properties and therefore electrolytic paper (paper for electrolytic capacitor), that is, paper for electrolytic capacitor, which is cellulosic paper, is used as the separator for the electrolytic capacitor.
The element of the aluminum electrolytic capacitor is constructed by interleaving a separator between an anode aluminum foil and a cathode aluminum foil and winding them. The area [S in the above Formula 1] of the oxide film, which is a dielectric of the capacitor, can be increased because the length of the anode aluminum foil of an element of the same volume is increased by making the separator thinner, and capacity enlargement of the aluminum electrolytic capacitor can be attained. Furthermore, since the volume of the element of the same capacity decreases by making the separator thinner without changing the area [S in the above Formula 1] of the oxide film, down sizing of the aluminum electrolytic capacitor can also be attained.

It is well-known that the electrolyte and the separator have a great influence on the impedance characteristic of the capacitor. For the purpose of improving the impedance characteristics of the capacitor, means for lowering the resistance of the electrolyte, making the separator thinner and less dense, etc. are employed. However, since making the separator thinner and less dense lowers the electrode isolating ability of the separator, this becomes a cause of decrease in withstand voltage and increase in percent defective due to short circuits in the capacitor manufacturing process.

Some causes of short circuits of the aluminum electrolytic capacitor due to having made the separator thinner are piercing or damage of the separator due to burr on the tab portion or an electrode foil end, or burr of a connecting part between an electrode foil and a lead wire, damage of the separator due to mechanical stress such as vibration or impact, dielectric breakdown of the oxide film resulting from electrical stress such as spark discharge, the aging process during capacitor manufacturing and a defect of the oxide film, or the like. Making the separator thinner means lowering resistance to these causes of short circuits (referred to as 'short-circuit resistance characteristics' hereafter). It is effective to make the separator have a further equable and dense formation or have high density in order to maintain the same short-circuit resistance characteristics even if the separator is made thinner.

In the case of a low voltage aluminum electrolytic capacitor, there has been a strong demand for improvement in impedance characteristics and a tendency to newly employ an electrolytic paper that is thinner or has lower density. In the case where the electrolytic paper has been made thinner or to have a lower density, the short-circuit resistance characteristics deteriorate.

In the case of making paper using unrefined pulp or scarcely refined pulp, since the density may be lowered, but diameters of fibers constituting the paper are large, it is difficult to form dense fiber mats. Furthermore, it is difficult to make thin paper when using unrefined pulp or scarcely refined pulp. Even when realizing both low density and thin form while maintaining a strength available as electrolytic paper, it is difficult to make a thickness of 25 $\mu$m or less.

Meanwhile, if highly refining is continued, a large quantity of minute fibrils will generate, and the pulp will be fragmented into smaller pieces of several tens of nm to several $\mu$m. Use of highly refined pulp allows making of thin paper of approximately 10 $\mu$m. However, density of the paper increases, and impedance characteristics deteriorate significantly.

It is well-known that when regenerated cellulose fibers capable of being refined are highly refined, fibrils with high rigidity and small fiber diameters are generated. Microporous highly-minute paper may be made by making paper using highly refined, regenerated cellulose fibers (Patent Document 1).

Microporous separators using the same cellulose as the electrolytic paper as the main component are also proposed in Patent Documents 2 to 5.

Layers made of regenerated cellulose with the inventions described in Patent Documents 2 and 3 practically use porous sheets made of cellulose film fabricated through a viscose process. The inventions described in Patent Documents 4 and 5 use in effect as a separator, a microporous cellulose film fabricated through a cuprammonium rayon process.

Other well-known cellulose solvents include lithium chloride/ dimethylacetamide cellulose solvent, lithium hydroxide/ urea cellulose solvent (Non-patent Document 1), sodium hydroxide/ urea cellulose solvent (Patent Document 6), sodium hydroxide/ thiourea cellulose solvent (Patent Document 7) and ionic liquids (Non-patent Document 2).

Prior Art Documents

Patent Documents

Patent Document 1: JP H5-267103A
Patent Document 2: JP H10-3898A
Patent Document 3: JP H11-86827A
Patent Document 4: JP 2007-141498A
Patent Document 5: Republication of PCT International Publication No. 2008-139619A
Patent Document 6: Japanese Translation of PCT International Application Publication No. 2008-542560A
Patent Document 7: Japanese Translation of PCT International Application Publication No. 2009-508015A

Non-patent Documents

Non-patent Document 1: "Experimental and analytical methods of cellulose" series No. 15, Dissolution of cellulose in alkaline-urea solvent and regenerative gelatinization thereof, KUGA, Shigenori, CAI Jie Cellulose Communications Vol. 15, No. 2 (2008)

Non-patent Document 2: CMC Publishing Co., Ltd., Ionic Liquid II- Chapter 13: Solubilization of poorly soluble substances, FUKAYA, Yukinobu and OHNO, Hiroyuki

DISCLOSURE OF THE INVENTION

Problem to be Solved by the Invention

However, it is well-known that even if regenerated cellulose fibers are highly refined, only the top layer portion of the fibers is made into fibrils, and the core portion is not made into fibrils but remains as is. For example, even if regenerated cellulose fibers having 12-$\mu$m diameters are highly refined, approximately 9 $\mu$m of the core portion will remain as is. Therefore, it is difficult to make paper with high minuteness and a thickness of 15 $\mu$m or less using highly refined, regenerated cellulose fibers.

As a representative example of a thin and microporous highly-minute separator is a porous film with polyolefin resin as a main constituent, which is used as a separator for lithium-ion batteries. However, since heat tolerance is insufficient, it cannot be used as a separator for aluminum electrolytic capacitors that require dimensional stability and chemical stability in temperatures of 100°C or higher. Moreover, since there is little retention of electrolyte, the electrolyte in the aluminum electrolytic capacitor easily dries up, thereby shortening the operating life. If the absolute quantity of the stored electrolytic solution is small, the electrolyte does not cover the entire surface of the oxide film and the electrode area decreases. Thus, there may be a case where a capacitance of the electrolytic capacitor does not develop as designed.

Furthermore, the cellulose film constructed through the viscose process disclosed in Patent Documents 2 and 3 contains hydrosulfate. When using a separator having a high content of hydrosulfate, sulfate ions elute into the electrolyte, corroding the oxide film, which is to be an insulator for the anode aluminum foil of the aluminum electrolytic capacitor. A defective part of the oxide film is a cause of increase in short-circuit defects and leakage current.

In addition, it is necessary for the cellulose film made through the viscose process to reduce the degree of polymerization of the cellulose, so as to make appropriate viscosity of a cellulose solution at the time of manufacturing. However, decrease in degree of polymerization reduces strength of the cellulose film and resistance against the electrolyte.

Moreover, the cellulose film made through the cuprammonium rayon process disclosed in Patent Documents 4 and 5 contains sulfate ions as well as many copper ions. In the case of using a separator having a high content of copper ions, a failure leading to a short-circuit occurs in that copper ions seep into the electrolyte, precipitate as copper oxide on the defective part of the oxide film on the anode aluminum foil when a reverse voltage is applied while the capacitor is repeatedly charging and discharging, and become dendrite that penetrates the separator.

The cellulose film using the lithium chloride/ dimethylacetamide cellulose solvent has a high content of chlorine, and the lithium hydroxide/ urea cellulose solvent, the sodium hydroxide/ urea cellulose solvent and the sodium hydroxide/ thiourea cellulose solvent in actual use have a high content of hydrosulfate since diluted sulfuric acid is used in a coagulation bath for neutralizing the alkali.

According to Non-patent Document 2, the ionic liquids are well-known that 1-butyl 3-methylimidazolium salt including $Cl^-$, $Br^-$, $SCN^-$, $BF_4^-$, $PF_6^-$ etc. as an anion dissolves cellulose. However, the ionic liquids that dissolve the cellulose use chlorine, which has good reactivity, or another halogen as an anion.

Since residual elements of the chlorine or halogen corrode the oxide film on the anode aluminum foil more than sulfate ions, use of a porous cellulose film made using a cellulose solvent such as these ionic liquids is unsuitable for use as a separator. Furthermore, as ionic liquids are very expensive, they are unsuitable for manufacturing constructional elements of an aluminum electrolytic capacitor characterized by its affordable price.

A porous cellulose film has hydrophilic properties and lipophilic properties as well as excellent electric insulation which is a characteristic of cellulose, and its thickness and density can be arbitrarily controlled. This allows provision of a separator having properties that are difficult to achieve with electrolytic paper, which is a mat of fibers. However, while, as mentioned before, there are many proposals for the porous cellulose film as a separator for electrical storage devices, it cannot be used as a separator for aluminum electrolytic capacitors since there is the problem of chemical impurities.

Means of Solving the Problem

The present invention aims to resolve the above problem, and the configuration below, for example, is provided as a means for achieving said aim.

That is, a separator for an aluminum capacitor is characterized in being interleaved between an anode and a cathode of a capacitor and used for preventing a short circuit and impregnating and retaining electrolyte for driving. Said separator is constituted by a porous film made of regenerated cellulose (A) dissolved and regenerated without forming a cellulose derivative and a fibrous component (B).

Furthermore, for example, the separator is characterized in that the fibrous component (B) is one or more kinds of fibers selected from among a plant-based pulp, regenerated cellulose fiber, cellulose fiber, animal fiber, inorganic fiber, or synthetic fiber that are available as paper raw material.

Yet further, for example, the porous film is characterized by having 2 ppm or less in content of chlorine, 10 ppm or less in hydrosulfate content, 3 to 70 $\mu$m in thickness, 0.1 g/cm$^3$ or greater in density, and 5 $\mu$m or less in average pore size.

Yet even further, for example, the porous film is characterized by including the regenerated cellulose (A) obtained by forming in a film form a cellulose solution made by dissolving cellulose in an amine oxide solvent, immersing the resulting cellulose solution in water or a poor solvent of the amine oxide solvent so as to coagulate and regenerate the cellulose, washing the regenerated cellulose with water to remove the amine oxide solvent, and drying the resulting cellulose.

Yet even further, for example, the separator is characterized in that the main component of the amine oxide solvent is N-methylmorpholine N-oxide. Alternatively, a separator for an aluminum electrolytic capacitor is characterized by a porous film obtained by forming in a film form a cellulose solution made by mixing the fibrous component (B), and regenerating the cellulose.

An aluminum capacitor is characterized in using any one of the above separators for aluminum electrolytic capacitors.

Results of the Invention

According to the present invention, a separator for an aluminum electrolytic capacitor having excellent strength characteristics and short-circuit resistance characteristics and capable of down sizing and/or capacity enlargement and/or impedance reduction of the capacitor, and an aluminum electrolytic capacitor using said separator may be provided.

BRIEF DESCRIPTION OF DRAWINGS

FIG. 1 is a graph showing measurement results of the impedance measured at 100 kHz and the percent defective after aging of 16 WV aluminum electrolytic capacitors using separators of Working Examples 1 to 7, Comparative Examples 1 and 2, Conventional Examples 1 and 2, and Reference Example 1;

FIG. 2 is a graph showing measurement results of the impedance measured at 100 kHz and the capacitance measured at 120 Hz, of 16 WV aluminum electrolytic capacitors using the separators of Working Examples 1 to 7, Comparative Example 2, and Conventional Examples 1 and 2;

FIG. 3 is a graph showing measurement results of the impedance measured at 1 kHz and the percent defective after aging of 450 WV aluminum electrolytic capacitors using separators of Working Examples 10 and 11, Comparative Example 3, Conventional Example 5, and Reference Example 4; and

FIG. 4 is a graph showing measurement results of the impedance measured at 1 kHz and the capacitance measured at 120 Hz, of 450 WV aluminum electrolytic capacitors using the separators of Working Examples 10 and 11, Comparative Example 3, and Conventional Example 5.

DESCRIPTION OF EMBODIMENTS

An embodiment of the present invention is explained with reference to drawings hereafter. This embodiment employs a configuration in which a porous film made of a regenerated cellulose (A) dissolved and regenerated without forming a cellulose derivative and a fibrous component (B) interleaving between an anode aluminum foil and a cathode aluminum foil is used as a separator constituting an aluminum electrolytic capacitor.

In this embodiment according to the present invention, an amine oxide solvent, for example, may be used as a solvent that is capable of dissolving and regenerating cellulose without forming a cellulose derivative. It is preferable to use tertiary amine oxides as the amine oxides, which are main components of an amine oxide solvent.

For example, while any tertiary amine oxide may be used as long as it dissolves cellulose and mixes it with water and is stable against water, use of N-methylmorpholine N-oxide (referred to as 'NMMO' hereafter) is particularly preferred from the aspect of availability, ease of collecting and refining used solvent, etc. Here, tertiary amine oxide stable against water means it does not induce a chemical reaction with water.

Ratio of NMMO to water to cellulose of the cellulose solvent used in the embodiment according to the present invention is preferably 70 to 95% by weight NMMO, 4 to 28% by weight water, and 2 to 20% by weight cellulose.

If the ratio of NMMO falls below 70% by weight, dissolving cellulose becomes difficult. Note that when the concentration of cellulose in the solution drops below 2% by weight, a large amount of cellulose solution is required when making a cellulose film, thereby decreasing production efficiency, and when it exceeds 20% by weight, degree of viscosity of the cellulose solution increases and is thereby inadequate for making a thin film.

Within this range, cellulose can be dissolved favorably and a homogeneous solution can be attained. However, solution conditions differ according to type of solvent, molding equipment, and even molding conditions, and therefore composition of the cellulose solution is not limited thereto.

The porous cellulose film made of the regenerated cellulose (A) and the fibrous component (B) may be manufactured using a method of uniformly dispersing fibers in a cellulose solution so as to form a film and then regenerating the cellulose, for example.

(About dissolved and regenerated cellulose (A) without forming a cellulose derivative)

It is preferable that the cellulose to be a material for the regenerated cellulose (A) is either total chlorine-free (TCF) bleached or unbleached to make the content of chlorine of the porous film be 2 ppm or less. Since corrosiveness of the oxide film becomes stronger and increase in short circuit defects and leakage current occurs when the content of chlorine in the separator is greater than 2 ppm, it is unsuitable as a separator for an aluminum electrolytic capacitor. Note that the content of chlorine here is a value measured by a method described in JIS C 2300 'Cellulosic papers for electrical purposes' - Part 2: 'Methods of test', Ion chromatography (extraction method) for chlorine content.

Furthermore, in order to make the hydrosulfate content of the porous film be 10 ppm or less, it is preferable to use cellulose having a hydrosulfate content of 400 ppm or less. While hydrosulfate decreases in a washing process described later after coagulation, the hydrosulfate content in the porous film may exceed 10 ppm when washing is insufficient if cellulose having a hydrosulfate content of 400 ppm or greater is used. If the hydrosulfate content in the separator exceeds 10 ppm, corrosiveness of the oxide film becomes stronger, thereby causing increase in short circuit defects and leakage current. Note that the hydrosulfate content here is the value of the extract, which is used in the aforementioned measurement of content of chlorine, measured using the ion chromatograph.

Wood pulp, nonwood pulp, mercerized pulp, dissolving pulp and regenerated cellulose may be used as materials for the regenerated cellulose (A). One or more types of these may be used in combination, and paper or nonwoven cloth made from these cellulose materials may be used as well. It is particularly favorable to use dissolving pulp or cotton linter pulp as the cellulose material.

Dissolving pulp and cotton linter pulp are suitable for construction of uniform and homogeneous regenerated cellulose (A) as they have an alpha-cellulose content of 90% or greater and high cellulose purity. Characteristics of a porous film obtained from difference in chemical properties and physical properties of the cellulose material may be adjusted.

(About fibrous component (B))

The fibrous component (B) may be at least one of, for example, a plant-based pulp, regenerated cellulose fiber, cellulose fiber made of a cellulose derivative, animal fiber, inorganic fiber, or synthetic fiber. The synthetic fiber may be, for example, polyvinyl alcohol fiber, polyamide fiber, semi-aromatic polyamide fiber, fully aromatic polyamide fiber, acrylic fiber, polyester fiber, fully aromatic polyester fiber, polyimide fiber, polyketone fiber, polyurethane fiber, polyethylene fiber, polypropylene fiber, polystyrene fiber, polytetrafluoroethylene fiber, polyurea fiber, etc. As long as it is a fiber having sufficient resistance against a cellulose solvent, the fiber may be added before dissolving the cellulose.

Moreover, for example, use of two or more kinds of cellulose material differing in degree of polymerization when making cellulose solutions allows utilization of difference in rate of dissolution of the cellulose material having a low degree of polymerization and cellulose material having a high degree of polymerization, and use as a fiber the undissolved cellulose material having a high degree of polymerization present in the cellulose solution in which the cellulose material having a low degree of polymerization is dissolved.

While length of the fiber used as the fibrous component (B) is not limited, 0.5 mm to 10 mm is preferred in actual use. In the case of 10 mm or longer fibers, these fibrous components tend to be easily tangled with each other when uniformly dispersing the fibers in the cellulose solution, though that cannot be always said because it may greatly depend on the aspect ratio and the fiber rigidity. The minimum length should be preferably a degree that allows maintenance of the interelectrode distance and that of the strength of the porous film.

Diameter of the fiber used as the fibrous component (B) is not limited; however, it is preferable that the maximum diameter is equal to a value ranging up to the thickness of the porous film, and that the minimum diameter can maintain the interelectrode distance and the strength of the porous film.

The content rate of fibrous components in the porous film made of the regenerated cellulose (A) and the fibrous component (B) is not particularly limited; however, an upper limit of 80% by weight is desired. In the case of a higher rate of content than 80% by weight, minuteness decreases due to reduction in the percentage of the regenerated cellulose. On the other hand, a lower limit that can secure the strength of the porous film is preferred.

In the case of using a method of uniformly dispersing fibers in a cellulose solution so as to form a film and then regenerate the cellulose, a compound liquid composed of cellulose, which is the (A) component, and fibers, which are the (B) components, is passed through a heating extrusion die and extruded into a coagulation bath constituted by water or an NMMO poor solvent. Alternatively, the liquid may be passed through little air gaps between the heating extrusion die and the coagulation bath and then put in the coagulation bath constituted by water or an NMMO poor solvent.

The temperature of the water used in the coagulation bath may be any temperature as long as the water has fluidity even when it is boiling, which also holds true for the temperature of the NMMO poor solvent. Once the cellulose is regenerated in the coagulation bath, the resulting film made of the regenerated cellulose (A) and the fibrous component (B) is washed with ion-exchange water and dried, thereby obtaining a porous film.

The film forming method may be not only using the heating extrusion die, but a method of casting on a heated base material such as a polyethylene terephthalate (referred to as PET hereafter) film with a predetermined clearance, a method of transferring a compound liquid onto the base material using a heated roller, a method of applying the compound liquid onto the heated roller and then peeling it off of said roller, etc. are available. Front-back differences may occur depending on the film-making method, and characteristics of the obtained porous film may differ according to degree of stretching at the time of cellulose regeneration. Characteristics of the porous film may be adjusted by changing manufacturing conditions.

The method for making a film made of the regenerated cellulose (A) and the fibrous component (B) porous may employ a method of adding a water-soluble polymer that is compatible with the amine oxide cellulose solution, making a film, and then removing the water-soluble polymer by dissolving, a method of adding particles that do not dissolve in the amine oxide cellulose solution, making a film, and then dissolving and removing the particles, an organic solvent substitution method, a freeze drying method, a subcritical drying method, a super-critical drying method, a method of adding a hydrogen bond inhibitor and drying it, etc., or a combination of these methods may also be employed.

Moreover, a porous film may be formed by making a capacitor element using as a separator a film to which a substance soluble in an electrolyte is added, and then dissolving the substance that was added when impregnating the electrolyte. The fibrous components contained in the porous film may be used as components when dissolving the electrolyte.

In the case of using the method of adding a water-soluble polymer that is compatible with the amine oxide cellulose solution, making a film, and then removing the water-soluble polymer by dissolving, for example, 20 to 300% by weight of polyvinyl alcohol (referred to as PVA hereafter) with respect to cellulose, with a degree of polymerization of 500 to 2500 and 98% or less saponification is added to the amine oxide cellulose solution, and then dissolved. A porous film may be obtained by adding, for example, PET fibers to the obtained amine oxide cellulose PVA solution so as to make a film, regenerating it in the coagulation bath, washing with hot water so as to extract and remove the PVA, and then drying it. In the case of adding PVA of 300% by weight or more, the form of the film cannot be maintained when extracting and removing the PVA, making it impossible to make a porous film.

A polymer other than PVA such as polyethylene oxide (referred to as PEO hereafter), polyacrylamide (referred to as PAM hereafter), starch, saccharide, vegetable gum, cellulose derivative, acrylic acid-based polymer, polyethylene imine, polyvinyl pyrrolidone, etc. that is compatible with the amine oxide cellulose solution and can be dissolved and removed using water or hot water in the washing process after the film is made may be used. A water-soluble polymer may be added before or after dissolving the cellulose in the amine oxide.

With respect to cellulose, addition of a 0.1% by weight or more, preferably 0.3% by weight or more of a substance such as PAM having a high aggregating effect that chemically acts with the cellulose allows formation of minute cellulose agglomerate in the amine oxide cellulose solution. Use of the amine oxide cellulose solution in this condition allows provision of a porous film.

In the case of using the method of adding particles that do not dissolve in the amine oxide cellulose solution, making a film, and then dissolving and removing the particles, the porous film can be made by adding to an amine oxide cellulose solution, for example, 5 to 300% by weight, preferably 10 to 200% by weight of silicone particles with respect to cellulose where each of the silicone particles is 0.1 to 10 $\mu$m in diameter, extracting and removing the silicone particles from an alkaline aqueous solution after the film is made; and then washing with water and drying.

A method of extraction and removal with an organic solvent or the like after film formation may be employed, using particles that are soluble in an organic solvent or the like, such as polymethyl methacrylate, polystyrene etc. as well as silicone. Even with the method using these particles, the particles may be added before or after dissolving the cellulose in the amine oxide.

With the method of forming a porous film by making a capacitor element using as a separator a film to which a substance soluble in an electrolyte is added, and then dissolving the substance that was added when impregnating the electrolyte, particles such as polylactic acid, for example, or fibers may be used as the substance to be dissolved.

As other methods for making a film porous, an organic solvent substitution method of substituting an organic solvent, such as ethanol, acetone, or isopropanol, for the water in the film and drying it, a freeze drying method of freezing and subliming a solvent, a subcritical drying method, a supercritical drying method and the like are available. These drying methods may be used in combination with the method using a water-soluble polymer or the method using particles or the like described above.

Moreover, thickness and density of the porous film may be controlled by adding to the amine oxide cellulose solution, a chemical that inhibits formation of hydrogen bonds, such as a fats-and-oils-type nonionic surface-active agent that has a polyoxyalkylene structure made of an oxyethylene group and an oxypropylene group, a sugar alcohol-based nonionic surface-active agent, or a sugar-based nonionic surface-active agent, which is used as a bulking agent for paper making. It may also be controlled by adding the bulking agent before drying the film that has been made porous in the washing process, etc.

While a porous film may be obtained using the above-mentioned methods, changing the method of making a film porous and/or changing the conditions for making a film porous allows control of characteristics such as density, average pore size, etc. of the porous film to be comprised. When making the porous film, a plasticizer such as glycol, glycerol or the like may be added to the amine oxide cellulose solution as needed.

Thickness of the porous film is preferably 3 to 70 $\mu$m. The porous film of the present invention made of the regenerated cellulose (A) and the fibrous component (B) has more excellent tear strength than the porous film made only of regenerated cellulose since the porous film includes the fibrous component (B) and the fibrous component (B) is oriented in the manufacturing direction when making the film. Improvement in tear strength of the porous film and existence of the fibrous component (B) as a pillar in the porous film allow reduction in breaking trouble during the porous film manufacturing process, thereby making it possible to manufacture a thin porous film of 5$\mu$m or less, wherein this size was impossible to be manufactured with a porous film made of only regenerated cellulose. Moreover, since the porous film has favorable handling ability, the breaking trouble of the separator in the aluminum electrolyte capacitor manufacturing process can be drastically reduced.

Meanwhile, in the case of a porous film thinner than 3 $\mu$m, decrease in mechanical strength may occur, and a problem in the making process such as breaking in the porous film manufacturing process or aluminum electrolyte capacitor element manufacturing process may occur. Furthermore, it is difficult to use this film as a separator since it is also weak against burrs of the anode aluminum foil and the cathode aluminum foil, and short-circuit resistance characteristics are weak.

On the other hand, if thickness of the porous film is greater than 70 $\mu$m, percentage of the separator in the capacitor element increases, which is a drawback to capacity enlargement. Moreover, if a film thickness is greater than 70 $\mu$m, increased distance between the anode aluminum foil and the cathode aluminum foil has a significant impact, thereby making it easier for impedance characteristics to deteriorate.

Density of the porous film made of the regenerated cellulose (A) and the fibrous component (B) is preferably 0.10 g/ cm$^3$ or greater. This is because the case of a lower density than 0.10 g/ cm$^3$ remarkably decreases mechanical strength, thereby leading to generation of problems during the process, reduction of short-circuit resistance characteristics due to porosity being too high, and increase in rate of short circuit generation in the capacitor.

Average pore size of the porous film made of the regenerated cellulose (A) and the fibrous component (B) is preferably 5 $\mu$m or less. In the case of a larger average pore size than 5 $\mu$m, reduction of short-circuit resistance characteristics is remarkable.

An aluminum electrolytic capacitor that has been sized down and/or capacity enlarged and/or impedance reduced can be made by interleaving between an anode aluminum foil and a cathode aluminum foil a porous film, as a separator, made of the regenerated cellulose (A) and the fibrous component (B) obtained in this manner and then winding them into a capacitor element, immersing the capacitor element in liquid electrolyte so as to impregnate it with the electrolyte, placing it in a case, and then sealing it closed and aging it. Note that the porous film may be used independently or it may be used in combination with another separator such as paper for electrolytic capacitor.

Working Examples:

Working examples of the separator and the aluminum electrolytic capacitor using the separator of this embodiment according to the above-described present invention are described below, in the case where the porous film made of the regenerated cellulose (A) and the fibrous component (B) is used as the separator.

[Measurement method and evaluation method of separator characteristics]

Measuring method and evaluating method of respective testing results for separators described in respective working examples, comparative examples, conventional examples and reference examples are as given below.

Thickness, basis weight, density and content of chlorine are measured in compliance with the test method of JIS C 2300: 'Cellulosic papers for electrical purposes'.

In measurement of thickness, ten samples are stacked, thickness is measured at three or more points using an automatic stop-type external micrometer, and a mean value per sample is calculated as the thickness of the samples.

Measurement of density is conducted in compliance with method B (method of finding density in an absolute dry condition).

The basis weight is calculated from the values of thickness and density.

In measurement of content of chlorine, extract produced in compliance with '17.2.4.2' Extraction method, Part 5 is measured through '17.2.4.3' Ion chromatography.

The hydrosulfate content is measured by the same method as the content of chlorine.

In measurement of average pore size, average pore size ($\mu$m) is found from pore size distribution measured by a bubble point method (ASTMF 316-86, JIS K3832) using a Parm-Porometer manufactured by PMI.

[Manufacturing method of aluminum electrolytic capacitor]

A separator is interleaved between an anode aluminum foil which has undergone etching and oxide film formation and a cathode aluminum foil, so as not to touch each other, and wound into a capacitor element. The capacitor element is impregnated with a predetermined electrolyte, placed in a case and then sealed so as to construct an aluminum electrolytic capacitor that has a diameter of 10 mm, height of 20 mm, and rated voltage of 16WV or 63 WV or 450 WV.

[Workability during capacitor element manufacturing]

When manufacturing 1000 capacitor elements, number of times of breakage occurrence of separators is measured under the same manufacturing conditions, separators having the breakage occurrence times of one or less is evaluated as good workability, separators of two to four times as moderate workability, and separators of five times or more as poor workability, and the levels of workability are denoted by a circle symbol, a triangle symbol, and an x symbol, respectively, in Table 2, etc.

[Percent defective after capacitor aging]

Voltage applied to each of 1000 capacitor samples with respect to working examples, each of 1000 capacitor samples with respect to comparative examples, each of 1000 capacitor samples with respect to conventional examples, and each of 1000 capacitor samples with respect to reference examples is gradually increased until reaching approximately 110% of the rated voltage while all the samples are being aged. Number of faulty capacitors including aging short-circuits, operation of an explosion proof valve, liquid leakage, and external aberrations such as swelling of the sealing part are divided by 1000, and the resulting value is set as percent defective expressed in percentage.

[Capacitance of aluminum electrolytic capacitor]

Capacitance of the electrolytic capacitor is measured at 20°C and a frequency of 120 Hz using an LCR meter.

[Impedance of aluminum electrolytic capacitor]

Impedance of the electrolytic capacitor is measured at 20°C and at a frequency of 100 kHz or at 20°C and at a frequency of 1 kHz using an LCR meter.

[Working Example 1]

A cellulose/ NMMO solution having a cellulose/ NMMO rate of 5/95 (% by weight, the same hereafter) is obtained using TCF dissolving pulp having a degree of polymerization of 700. PET fibers having a 3 $\mu$m diameter and 1.0 mm fiber length are added to the obtained cellulose/ NMMO solution such that the cellulose/ PET fiber rate is 70/30, and it is then extruded through a 0.15 mm-wide slit using a T die-type extruder into a coagulation bath constituted by water ($H_2O$) so as to regenerate the cellulose. Once the regenerated cellulose is washed in three washing baths of ion-exchanged water, the solvent is exchanged in three washing baths of isopropyl alcohol (referred to as IPA hereafter) and the cellulose is dried in a drum-type dryer, thereby making a porous film having a thickness of 29.8 $\mu$m, density of 0.31 g/cm$^3$, and an average pore size of 0.24 $\mu$m.

[Working Example 2]

A cellulose/ NMMO solution having a cellulose/ NMMO rate of 10/90 is obtained using TCF cotton linter pulp having a degree of polymerization of 1500. PET fibers having a 3 $\mu$m diameter and 1.5 mm fiber length are added to the obtained cellulose/ NMMO solution such that the cellulose/ PET fiber rate is 50/50, and it is then extruded through a 0.04 mm-wide slit using a T die-type extruder, passed through 10 mm air gaps, and then immersed in a coagulation bath of a 20% by weight NMMO poor solvent so as to regenerate the cellulose. Once the regenerated cellulose is washed in three washing baths of ion-exchanged water, it is freeze dried, thereby making a porous film having a thickness of 29.6 $\mu$m, density of 0.11 g/cm$^3$, and an average pore size of 4.97 $\mu$m.

[Working Example 3]

A cellulose/ NMMO solution having a cellulose/NMMO rate of 10/90 is obtained using TCF cotton linter pulp having a degree of polymerization of 1500. PET fibers having a 0.7 $\mu$m diameter and 0.5 mm fiber length are added to the obtained cellulose/ NMMO solution such that the cellulose/ PET fiber rate is 99.5/0.5, and it is then extruded from a 0.04 mm-wide slit using a T die-type extruder, passed through 10 mm air gaps, and then immersed in a coagulation bath of a 20% by weight NMMO poor solvent so as to regenerate the cellulose. Once the regenerated cellulose is washed in three washing baths of ion-exchanged water, it is freeze dried, thereby making a porous film having a thickness of 28.8 $\mu$m, density of 0.12 g/cm$^3$, and an average pore size of 4.55 $\mu$m.

[Working Example 4]

A cellulose/ NMMO solution having a cellulose/ NMMO rate of 10/90 is obtained using TCF dissolving pulp having a degree of polymerization of 700. Solvent spinning rayon which is refinable, regenerated cellulose fibers having a 12 $\mu$m diameter and 6.0 mm fiber length are added to the obtained cellulose/ NMMO solution such that the cellulose/ solvent spinning rayon rate is 90/10, and it is then extruded through a 0.10 mm-wide slit using a T die-type extruder into a coagulation bath constituted by water so as to regenerate the cellulose. Once the regenerated cellulose is washed in three washing baths of ion-exchanged water, the solvent is exchanged in three ethanol baths and the cellulose is dried in a drum-type dryer, thereby making a porous film having a thickness of 15.2 $\mu$m, density of 0.41 g/cm$^3$, and an average pore size of 0.72 $\mu$m.

[Working Example 5]

A cellulose/ NMMO solution having a cellulose/ NMMO rate of 5/95 is obtained using TCF dissolving pulp having a degree of polymerization of 700. PET fibers having a 0.7 $\mu$m diameter and 1.0 mm fiber length are added to the obtained cellulose/ NMMO solution such that the cellulose/ PET fiber rate is 80/20, 3% by weight solid content of a fats-and-oils-type nonionic surface-active agent with respect to cellulose where the agent used as a bulking agent has a polyoxyalkylene structure made of an oxyethelyne group and an oxypropylene group is also added, and it is then extruded through a 0.10 mm-wide slit using a T die-type extruder into a coagulation bath constituted by 20% by weight NMMO poor solvent so as to regenerate the cellulose. Once the regenerated cellulose is washed in three washing baths of ion-exchanged water, it is dried in a drum-type dryer, thereby making a porous film having a thickness of 3.1 $\mu$m, density of 0.89 g/cm$^3$, and an average pore size of 0.15 $\mu$m.

[Working Example 6]

A cellulose/NMMO solution having a cellulose/ NMMO rate of 3/97 is obtained using TCF cotton linter pulp having a degree of polymerization of 1500. Glass fibers having a 13 $\mu$m diameter and 3.0 mm fiber length are added to the obtained cellulose/ NMMO solution such that the cellulose/ glass fiber rate is 20/80, and it is then extruded through a 0.30 mm-wide slit using a T die-type extruder into a coagulation bath constituted by water so as to regenerate the cellulose. Once the regenerated cellulose is washed in three washing baths of ion-exchanged water, the solvent is exchanged in three ethanol baths and the cellulose is dried in a drum-type dryer, thereby making a porous film having a thickness of 40.5 $\mu$m, density of 0.49 g/cm$^3$, and an average pore size of 4.84 $\mu$m.

[Working Example 7]

A cellulose/ NMMO solution having a cellulose/ NMMO rate of 5/95 is obtained using TCF cotton linter pulp having a degree of polymerization of 1500. Polylactic acid fibers having a 10 $\mu$m diameter and 1.0 mm fiber length are added to the obtained cellulose/ NMMO solution such that the cellulose/ polylactic acid fiber rate is 50/50, and it is then extruded through a 0.15 mm-wide slit using a T die-type extruder, passed through 10 mm air gaps, and then immersed in a coagulation bath of a 20% by weight NMMO poor solvent so as to regenerate the cellulose. Once the regenerated cellulose is washed in three washing baths of ion-exchanged water, the solvent is exchanged in three ethanol baths and the cellulose is dried in a drum-type dryer, thereby making a porous film having a thickness of 37.6 $\mu$m, density of 0.28 g/cm$^3$, and an average pore size of 1.35 $\mu$m. The obtained porous film is immersed in a gamma-butyllactone (GBL) washing bath, the polylactic acid fibers are dissolved and removed and then dried, thereby making a porous film having a thickness of 37.6 $\mu$m, density of 0.14 g/cm$^3$, and an average pore size of 2.89 $\mu$m. Formation of a capacitor element using the polylactic acid fiber-containing porous film and impregnating the GBL electrolyte allows decrease in density of the porous film in an aluminum electrolytic capacitor.

[Working Example 8]

A cellulose/ PVA/ NMMO solution having a cellulose/ PVA/ NMMO rate of 5/5/90 is obtained using TCF dissolving pulp having a degree of polymerization of 700 and PVA having 80% saponification and a degree of polymerization of 2000. PET fibers having a 0.7 $\mu$m diameter and 1 mm fiber length are added to the obtained cellulose/ PVA/ NMMO solution such that the cellulose/ PET fiber rate is 80/20, and it is then extruded through a 0.30 mm-wide slit using a T die-type extruder, passed through 10 mm, air gaps, and then immersed in a coagulation bath of a 5% by weight NMMO poor solvent so as to regenerate the cellulose/ PVA film. Once the regenerated film is immersed and washed in three washing baths of 95°C ion-exchanged water so as to remove the PVA, the solvent is exchanged in three ethanol baths and the film is dried in a drum-type dryer, thereby making a porous film having a thickness of 25.0 $\mu$m, density of 0.43 g/cm$^3$, and an average pore size of 0.26 $\mu$m.

[Working Example 9]

An aramid fiber blended cellulose/ NMMO solution is obtained by using TCF dissolving pulp having a degree of polymerization of 700 with a cellulose/ NMMO ratio of 5/95, and adding aramid fibers having an 8 $\mu$m diameter and 2 mm fiber length such that the cellulose/ aramid fiber rate is 70/30 so as to dissolve the cellulose. 5% by weight PAM, which is used as a flocculant, with respect to cellulose is added as an active element to the obtained cellulose/ NMMO solution, it is extruded through a 0.60 mm-wide slit using a T die-type extruder, passed through 10 mm air gaps, and then immersed in a coagulation bath of a 20% by weight NMMO poor solvent so as to regenerate the cellulose. Once the regenerated cellulose is washed in three washing baths of ion-exchanged water, the solvent is exchanged in three IPA baths and the cellulose is dried in a drum-type dryer, thereby making a porous film having a thickness of 61.4 $\mu$m, density of 0.57 g/cm$^3$, and an average pore size of 0.38 $\mu$m.

[Working Example 10]

A cellulose/ NMMO solution having a cellulose/ NMMO rate of 5/95 is obtained using TCF cotton linter pulp having a degree of polymerization of 1500. 0.1% by weight glycerin with respect to cellulose is added as a plasticizer to the obtained cellulose/ NMMO solution, Manila hemp pulp having an 18 $\mu$m diameter and 3.5 mm fiber length is also added such that the cellulose/ Manila hemp pulp rate is 70/30, and it is then extruded through a 0.70 mm-wide slit using a T die-type extruder into a coagulation bath constituted by water so as to regenerate the cellulose. Once the regenerated cellulose is washed in three washing baths of ion-exchanged water, the solvent is exchanged in three ethanol baths and the cellulose is dried in a drum-type dryer, thereby making a porous film having a thickness of 67.2 $\mu$m, density of 0.67 g/cm$^3$, and an average pore size of 0.13 $\mu$m.

[Working Example 11]

A cellulose/ NMMO solution in such a state that dissolving pulp is dissolved and there is residual cotton linter pulp is obtained using TCF dissolving pulp having a degree of polymerization of 500 and TCF cotton linter pulp having a degree of polymerization of 1500 with a dissolving pulp/ cotton linter pulp/ NMMO ratio of 3/3/94. 3% by weight solid content of a fats-and-oils-type nonionic surface-active agent with respect to cellulose where the agent used as a bulking agent has a polyoxyalkylene structure made of an oxyethelyne group and an oxypropylene group is added to the cellulose/ NMMO solution, and it is then extruded through a 0.40 mm-wide slit using a T die-type extruder into a coagulation bath constituted by 20% by weight NMMO poor solvent so as to regenerate the cellulose. Once the regenerated cellulose is washed in three washing baths of ion-exchanged water, it is dried in a drum-type dryer, thereby making a porous film having a thickness of 25.1 $\mu$m, density of 0.93 g/cm$^3$, and an average pore size of 0.05 $\mu$m.

[Comparative Example 1]

A cellulose/ NMMO solution having a cellulose/ NMMO rate of 8/92 is obtained using TCF cotton linter pulp having a degree of polymerization of 1500. PET fibers having a 3 $\mu$m diameter and 1.5 mm fiber length are added to the obtained cellulose/ NMMO solution such that the cellulose/ PET fiber rate is 50/50, and it is then extruded through a 0.04 mm-wide slit using a T die-type extruder, passed through 10 mm air gaps, and then immersed in a coagulation bath of a 20% by weight NMMO poor solvent so as to regenerate the cellulose. Once the regenerated cellulose is washed in three washing baths of ion-exchanged water, it is freeze dried, thereby making a porous film having a thickness of 31.4 $\mu$m, density of 0.09 g/cm$^3$, and an average pore size of 5.48 $\mu$m.

[Comparative Example 2]

A cellulose/ NMMO solution having a cellulose/ NMMO rate of 3/97 is obtained using TCF cotton linter pulp having a degree of polymerization of 1500. Glass fibers having a 13 $\mu$m diameter and 3.0 mm fiber length are added to the obtained cellulose/ NMMO solution such that the cellulose/ glass fiber rate is 15/85, and it is then extruded through a 0.35 mm-wide slit using a T die-type extruder into a coagulation bath constituted by water so as to regenerate the cellulose. Once the regenerated cellulose is washed in three washing baths of ion-exchanged water, the solvent is exchanged in three ethanol baths and the cellulose is dried in a drum-type dryer, thereby making a porous film having a thickness of 47.3 $\mu$m, density of 0.53 g/cm$^3$, and an average pore size of 7.66 $\mu$m.

[Comparative Example 3]

A cellulose/ NMMO solution having a cellulose/ NMMO rate of 5/95 is obtained using TCF cotton linter pulp having a degree of polymerization of 1500. 0.1% by weight glycerin with respect to cellulose is added as a plasticizer to the obtained cellulose/ NMMO solution, Manila hemp pulp having an 18 $\mu$m diameter and 3.5 mm fiber length is also added such that the cellulose/ Manila hemp pulp rate is 70/30, and it is then extruded through a 0.75 mm-wide slit using a T die-type extruder into a coagulation bath constituted by water so as to regenerate the cellulose. Once the regenerated cellulose is washed in three washing baths of ion-exchanged water, the solvent is exchanged in three ethanol baths and the cellulose is dried in a drum-type dryer, thereby making a porous film having a thickness of 71.5 $\mu$m, density of 0.68 g/cm$^3$, and an average pore size of 0.12 $\mu$m.

[Comparative Example 4]

A cellulose/ NMMO solution having a cellulose/ NMMO rate of 5/95 is obtained using ECF bleached dissolving pulp having a degree of polymerization of 700. PET fibers having a 3 $\mu$m diameter and 1 mm fiber length are added to the obtained cellulose/ NMMO solution such that the cellulose/ PET fiber rate is 80/20, and it is then extruded through a 0.40 mm-wide slit using a T die-type extruder into a coagulation bath constituted by 20% by weight NMMO poor solvent so as to regenerate the cellulose. Once the regenerated cellulose is washed in three washing baths of ion-exchanged water, and the solvent is exchanged in three ethanol baths, the cellulose is dried in a drum-type dryer, thereby making a porous film having a thickness of 31.2 $\mu$m, density of 0.79 g/cm$^3$, and an average pore size of 0.16 $\mu$m.

[Comparative Example 5]

A cellulose/ NMMO solution having a cellulose/ NMMO rate of 5/95 is obtained using dissolving pulp having a degree of polymerization of 700 and a sulfate ion content of 500 ppm. PET fibers having a 3 $\mu$m diameter and 1 mm fiber length are added to the obtained cellulose/ NMMO solution such that the cellulose/ PET fiber rate is 80/20, and it is then extruded through a 0.40 mm-wide slit using a T die-type extruder into a coagulation bath constituted by 20% by weight NMMO poor solvent so as to regenerate the cellulose. Once the regenerated cellulose is washed in three washing baths of ion-exchanged water, and the solvent is exchanged in three ethanol baths, the cellulose is dried in a drum-type dryer, thereby making a porous film having a thickness of 28.9 $\mu$m, density of 0.77 g/cm$^3$, and an average pore size of 0.18 $\mu$m.

[Comparative Example 6]

ECF dissolving pulp is processed using sodium hydroxide and then processed using carbon disulfide, thereby making viscose. PET fibers having a 3 $\mu$m diameter and 1 mm fiber length are added to the obtained viscose such that the cellulose/ PET fiber rate is 80/20, and it is then extruded using a T die-type extruder into dilute sulfuric acid so as to regenerate the cellulose. Once the regenerated cellulose is washed in three washing baths of ion-exchanged water, and the solvent is exchanged in three ethanol baths, the cellulose is dried in a drum-type dryer, thereby making a porous film having a thickness of 29.7 $\mu$m, density of 0.83 g/cm$^3$, and an average pore size of 0.15 $\mu$m.

[Comparative Example 7]

A cellulose/ NMMO solution having a cellulose/ NMMO rate of 5/95 is obtained using TCF dissolving pulp having a degree of polymerization of 700. PET fibers having a 0.7 $\mu$m diameter and 1 mm fiber length are added to the obtained cellulose/ NMMO solution such that the cellulose/ PET fiber rate is 80/20, 3% by weight solid content of a fats-and-oils-type nonionic surface-active agent with respect to cellulose where the agent used as a bulking agent has a polyoxyalkylene structure made of an oxyethelyne group and an oxypropylene group is also added, and it is then extruded through a 0.08 mm-wide slit using a T die-type extruder into a coagulation bath constituted by water so as to regenerate the cellulose. A porous film having a thickness of 2.5 $\mu$m was attempted to be made by washing the regenerated cellulose in three washing baths of ion-exchanged water, exchanging the solvent in three ethanol baths and drying the cellulose in a drum-type dryer; however, the film kept breaking in the drying step, and thus a porous film could not be obtained.

[Conventional Example 1]

A raw material made of 50% by weight Manila hemp pulp and 50% by weight esparto pulp is refined until reaching a CSF of 600 ml using a refining device and made into paper using a cylinder triplex machine so as to make cylinder triplex (paper for electrolytic capacitor) having a thickness of 48.7 $\mu$m, density of 0.35 g/cm$^3$, and an average pore size of 13.6 $\mu$m.

[Conventional Example 2]

A raw material made of 50% by weight Manila hemp pulp and 50% by weight esparto pulp is refined until reaching a CSF of 500 ml using a refining device and made into paper using a cylinder duplex machine so as to make cylinder duplex (paper for electrolytic capacitor) having a thickness of 51.7 $\mu$m, density of 0.49 g/cm$^3$, and an average pore size of 6.89 $\mu$m.

[Conventional Example 3]

A raw material resulting from refining solvent spinning rayon which is refinable, regenerated cellulose fibers until reaching a CSF of 5 ml or less using a refining device is made into paper using a Fourdrinier machine, thereby making Fourdrinier simplex (paper for electrolytic capacitor) having a thickness of 24.5 $\mu$m, density of 0.44 g/cm$^3$, and an average pore size of 0.53 $\mu$m.

[Conventional Example 4]

A raw material made of 50% by weight Manila hemp pulp and 50% by weight esparto pulp is refined until reaching a CSF of 400 ml using a refining device and made into paper using a cylinder duplex machine so as to make cylinder duplex (paper for electrolytic capacitor) having a thickness of 90.6 $\mu$m, density of 0.61 g/cm$^3$, and an average pore size of 3.27 $\mu$m.

[Conventional Example 5]

As a raw material for Fourdrinier paper making, softwood kraft pulp is refined until reaching a CSF of 5 ml or less using a refining device in such a manner that a high density paper is made having a thickness of 25.2 $\mu$m and density of 0.86 g/ cm$^3$ at a Fourdrinier part, while as a raw material for cylinder paper making, softwood kraft pulp is refined until reaching a CSF of 400 ml in such a manner that paper having a thickness of 35.9 $\mu$m and density of 0.67 g/cm$^3$ is made at a cylinder part, and then the obtained papers are combined together to make Fourdrinier/cylinder duplex (paper for electrolytic capacitor) having a thickness of 61.1 pm and density of 0.75 g/cm$^3$. The average pore size was too small and could not be measured by the bubble point method.

[Reference Example 1]

A cellulose/ NMMO solution having a cellulose/ NMMO rate of 10/90 is obtained using TCF cotton linter pulp having a degree of polymerization of 1500. The obtained cellulose/ NMMO solution is extruded through a 0.05 mm-wide slit using a T die-type extruder, passed through 10 mm air gaps, and then immersed in a coagulation bath of a 20% by weight NMMO poor solvent so as to regenerate the cellulose. Once the regenerated cellulose is washed in three washing baths of ion-exchanged water, it is freeze dried, thereby making a porous cellulose film having a thickness of 28.1 $\mu$m, density of 0.11 g/cm$^3$, and an average pore size of 4.53 $\mu$m.

[Reference Example 2]

Hipore® H6022 manufactured by Asahi Kasei E-materials Corporation, which is a commercially available porous polyolefin film, has a thickness of 27.0 $\mu$m, density of 0.47 g/cm$^3$, and an average pore size of 0.12 $\mu$m.

[Reference Example 3]

A raw material made of 50% by weight Manila hemp pulp and 50% by weight esparto pulp is refined until reaching a CSF of 400 ml using a refining device and made into paper using a cylinder duplex machine so as to make cylinder duplex (paper for electrolytic capacitor) having a thickness of 60.7 $\mu$m, density of 0.61 g/cm$^3$, and an average pore size of 5.09 $\mu$m.

[Reference Example 4]

A raw material resulting from refining unbleached softwood kraft pulp until reaching a CSF of 5 ml or less using a refining device is made into paper using a Fourdrinier machine so as to make Fourdrinier simplex (paper for electrolytic capacitor) having a thickness of 20.4 $\mu$m and density of 0.85 g/ cm$^3$. The average pore size was too small and could not be measured by the bubble point method.

Thickness, basis weight, density, average pore size, content of chlorine and hydrosulfate content of the porous films obtained in Working Examples 1 to 11, the porous films obtained in Comparative Examples 1 to 7, the papers for electrolytic capacitor obtained in Conventional Examples 1 to 5 and Reference Examples 3 and 4, the porous cellulose film obtained in Reference Example 1, and the porous film obtained in Reference Example 2 are given in Table 1.

[Table 1]

Table 1

| | Thickness | Basis weight | Density | Average pore size | Content of Chlorine | Hydrosulfate content |
|---|---|---|---|---|---|---|
| | $\mu$m | g/m$^2$ | g/cm$^3$ | $\mu$m | ppm | ppm |
| Working Example 1 | 29.8 | 9.2 | 0.31 | 0.24 | 1.8 | 9.7 |
| Working Example 2 | 29.6 | 3.3 | 0.11 | 4.97 | 1.2 | 5.4 |
| Working Example 3 | 28.8 | 3.5 | 0.12 | 4.55 | 0.4 | 1.3 |
| Working Example 4 | 15.2 | 6.2 | 0.41 | 0.72 | 0.3 | 0.9 |
| Working Example 5 | 3.1 | 2.8 | 0.89 | 0.15 | 0.6 | 1.4 |
| Working Example 6 | 40.5 | 19.8 | 0.49 | 4.84 | 1.5 | 4.2 |
| Working Example7 (After dissolving) | 37.6 / 37.6 | 10.5 / 5.3 | 0.28 / 0.14 | 1.35 / 2.89 | 1.1 / - | 7.3 / - |
| Working Example 8 | 25.0 | 10.8 | 0.43 | 0.26 | 1.6 | 4.9 |
| Working Example9 | 61.4 | 35.3 | 0.57 | 0.38 | 1.7 | 8.8 |
| Working Example10 | 67.2 | 45.0 | 0.67 | 0.13 | 0.9 | 2.2 |
| Working Example 11 | 25.1 | 23.3 | 0.93 | 0.05 | 1.4 | 7.6 |
| Comparative Example 1 | 31.4 | 2.8 | 0.09 | 5.48 | 1.5 | 4.6 |
| Comparative Example 2 | 47.3 | 25.1 | 0.53 | 7.66 | 1.5 | 5.9 |
| Comparative Example3 | 71.5 | 48.6 | 0.68 | 0.12 | 0.9 | 1.1 |
| Comparative Example4 | 31.2 | 24.6 | 0.79 | 0.16 | 2.3 | 6.3 |
| Comparative Example5 | 28.9 | 22.3 | 0.77 | 0.18 | 1.5 | 10.8 |
| Comparative Example6 | 29.7 | 24.7 | 0.83 | 0.15 | 5.4 | 37.1 |
| Comparative Example7 | targeted 2.5, failed | - | - | - | - | - |

(continued)

|  | Thickness | Basis weight | Density | Average pore size | Content of Chlorine | Hydrosulfate content |
|---|---|---|---|---|---|---|
|  | $\mu$m | g/m$^2$ | g/cm$^3$ | $\mu$m | ppm | ppm |
| Conventional Example 1 | 48.7 | 17.0 | 0.35 | 13.6 | 0.3 | 0.5 |
| Conventional Example 2 | 51.7 | 25.3 | 0.49 | 6.89 | 0.5 | 0.4 |
| Conventional Example 3 | 24.5 | 10.8 | 0.44 | 0.53 | 0.4 | 0.7 |
| Conventional Example 4 | 90.6 | 55.3 | 0.61 | 3.27 | 0.5 | 0.9 |
| Conventional Example 5 | 61.1 | 45.8 | 0.75 | - | 0.6 | 6.4 |
| Reference Example 1 | 28.1 | 3.1 | 0.11 | 4.53 | 0.2 | 1.7 |
| Reference Example 2 | 27.0 | 12.7 | 0.47 | 0.12 | 0.3 | 0.6 |
| Reference Example 3 | 60.7 | 37.0 | 0.61 | 5.09 | 0.7 | 0.3 |
| Reference Example 4 | 20.4 | 17.3 | 0.85 | - | 0.8 | 8.9 |

Using the porous films obtained in Working Examples 1 to 7, the porous films obtained in Comparative Examples 1 and 2, the papers for electrolytic capacitor obtained in Conventional Examples 1 and 2, and the porous cellulose film obtained in Reference Example 1, one thousand 16 WV aluminum electrolytic capacitors using GBL electrolyte are constructed, and percent defective, impedance (100 kHz) and capacitance are measured.

The physical properties of the porous films obtained in Working Examples 1 to 7, the porous films obtained in Comparative Examples 1 and 2, the papers for electrolytic capacitor obtained in Conventional Examples 1 and 2, and the porous cellulose film obtained in Reference Example 1, and workability when manufacturing capacitor elements and evaluation results of the aluminum electrolytic capacitors are given in Table 2.

[Table 2]

| Table 2<br>16 WV capacitor | Separator characteristics | | | | | | Workability when manufacturing element | Capacitor characteristics | | |
|---|---|---|---|---|---|---|---|---|---|---|
| | Thickness | Basis weight | Density | Average pore size | Content of Chlorine | Hydrosulfate content | | Percent defective | Impedance | Capacitance |
| | $\mu$m | g/m$^2$ | g/cm$^3$ | $\mu$m | ppm | ppm | | % (1000 units) | $\Omega$/100 kHz | $\mu$F |
| Working Example 1 | 29.8 | 9.2 | 0.31 | 0.24 | 1.8 | 9.7 | ○ | 0.0 | 0.031 | 1758 |
| Working Example 2 | 29.6 | 3.3 | 0.11 | 4.97 | 1.2 | 5.4 | ○ | 1.1 | 0.021 | 1762 |
| Working Example 3 | 28.8 | 3.5 | 0.12 | 4.55 | 0.4 | 1.3 | ○ | 1.0 | 0.023 | 1774 |
| Working Example 4 | 15.2 | 6.2 | 0.41 | 0.72 | 0.3 | 0.9 | ○ | 0.1 | 0.032 | 2028 |
| Working Example 5 | 3.1 | 2.8 | 0.89 | 0.15 | 0.6 | 1.4 | $\Delta$ | 1.8 | 0.033 | 2323 |
| Working Example 6 | 40.5 | 19.8 | 0.49 | 4.84 | 1.5 | 4.2 | $\Delta$ | 0.0 | 0.035 | 1602 |
| Working Example 7<br>(After dissolving) | 37.6<br>37.6 | 10.5<br>5.3 | 0.28<br>0.14 | 1.35<br>2.89 | 1.1<br>- | 7.3<br>- | ○<br>- | -<br>0.6 | -<br>0.026 | -<br>1642 |
| Comparative Example 1 | 31.4 | 2.8 | 0.09 | 5.48 | 1.5 | 4.6 | | 2.5 | 0.021 | 1733 |
| Comparative Example 2 | 47.3 | 25.1 | 0.53 | 7.66 | 1.5 | 5.9 | $\times$ | 0.5 | 0.037 | 1517 |
| Conventional Example 1 | 48.7 | 17.0 | 0.35 | 13.6 | 0.3 | 0.5 | ○ | 2.1 | 0.041 | 1500 |
| Conventional Example 2 | 51.7 | 25.3 | 0.49 | 6.89 | 0.5 | 0.4 | ○ | 1.3 | 0.046 | 1466 |
| Reference Example 1 | 28.1 | 3.1 | 0.11 | 4.53 | 0.2 | 1.7 | $\Delta$ | 1.2 | 0.023 | 1798 |

While the workability when constructing a capacitor element using the porous cellulose film obtained in Reference Example 1 is moderate (denoted by a triangle symbol in Table 2) and can be used as a separator for an aluminum electrolytic capacitor, workability when constructing a capacitor element using the porous films made of the regenerated cellulose (A) and the fibrous component (B) obtained in Working Examples 2 and 3 is good (denoted by a circle symbol in Table 2). The thickness and density of the porous films obtained in Working Examples 2 and 3 are nearly the same as those of the porous cellulous film obtained in Reference Example 1.

In particular, it has been confirmed that while the content of the fibrous component (B) of the porous film obtained in Working Example 3 is 0.5% by weight, workability when constructing a capacitor element improved more than with the porous cellulous film obtained in Reference Example 1, and improvement in strength has been revealed even when content of the fibrous component (B) was low.

The workability when constructing capacitor elements using the porous film having a thickness of 3.1 $\mu$m obtained in Working Example 5 and the porous film having a glass fiber content of 80% by weight obtained in Working Example 6 is moderate (denoted by a triangle symbol in Table 2) and can be used as a separator for an aluminum electrolytic capacitor. On the other hand, the workability when constructing the capacitor element using the porous film having a glass fiber content of 85% by weight obtained in Comparative Example 2 is poor (denoted by an x symbol in Table 2). Since neither chemical bond nor physical intertwining occur at contact points of glass fibers, strength of the porous film decreases more easily if the glass fiber content exceeds 80% by weight.

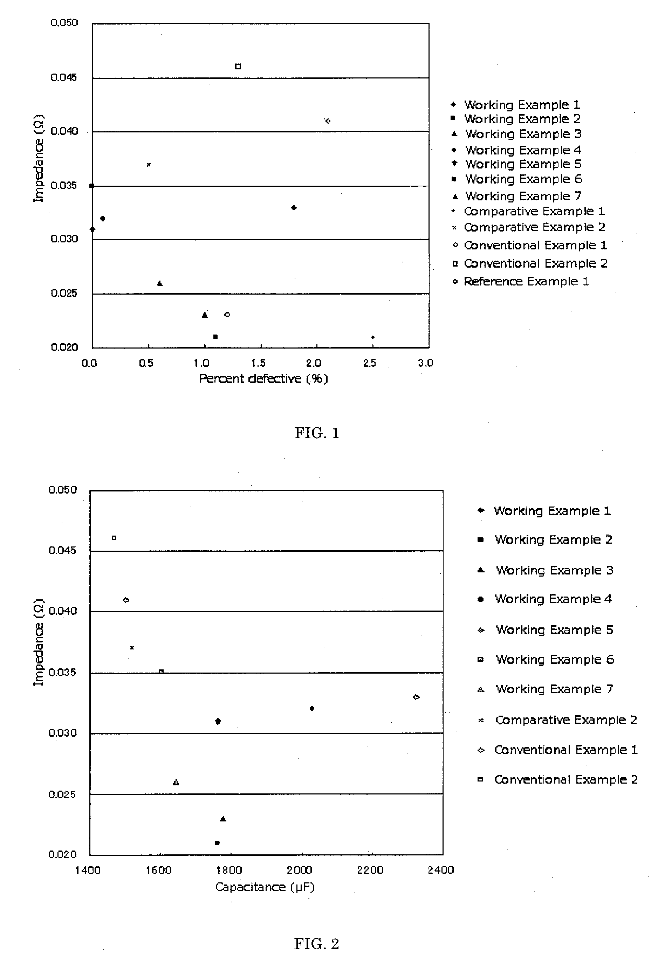

Measurement results of impedance measured at 100 kHz and percent defective after aging of the aluminum electrolytic capacitors using the porous films obtained in Working Examples 1 to 7, the porous films obtained in Comparative Examples 1 and 2, the papers for electrolytic capacitor obtained in Conventional Examples 1 and 2, and the porous cellulose film obtained in Reference Example 1 are given in FIG. 1.

In the case of improving percent defective of the aluminum electrolytic capacitors using the papers for electrolytic capacitor, changing the separator from the paper for electrolytic capacitor obtained in Conventional Example 1 to the paper for electrolytic capacitor obtained in Conventional Example 2 is generally carried out so as to change to a paper for electrolytic capacitor having a greater basis weight. In this case, as is evident from the relationships illustrated in FIG. 1, percent defective may be improved but impedance characteristics deteriorate at the same time.

Changing of the separator from the paper for electrolytic capacitor obtained in Conventional Example 1 to the porous film obtained in Working Example 1 has reduced the post-aging short-circuit rate down to 0% and has also reduced the impedance of the aluminum electrolytic capacitor by approximately 24%. Lower percent defective and lower impedance of the aluminum electrolytic capacitors using the porous films obtained in Working Examples 2 to 7 than those of the aluminum electrolytic capacitor using the paper for electrolytic capacitor obtained in Conventional Example 1 is possible at the same time.

Since density of the porous film according to this embodiment may be made lower than that of the paper for electrolytic capacitor, the basis weight may be reduced while maintaining the thickness. Reducing the basis weight leads to reduction in impedance of the aluminum electrolytic capacitor. Moreover, adjustment of manufacturing conditions for the porous films according to the present invention allows construction of a porous film having an arbitrary average pore size. Making the average pore size of the separator smaller secures sufficient short-circuit resistance characteristics even if the basis weight is reduced and thickness is made thinner.

Moreover, since the porous film obtained in Working Example 2 has a low density, a large amount of electrolyte may be retained inside. Since the aluminum electrolytic capacitor using the porous film obtained in Working Example 2 has a large amount of electrolyte and low impedance, it has excellent ripple current resistance and may maintain good properties even after long use.

Since the porous film containing 80% by weight glass fibers obtained in Working Example 6 is a separator having excellent heat tolerance, it is appropriate as a separator for aluminum electrolytic capacitors used for high temperature proof applications such as for an engine compartment of a vehicle.

With an aluminum electrolytic capacitor using the porous film containing polylactic acid fibers obtained in Working Example 7, the porous film is impregnated with the GBL electrolyte so that the polylactic acid fibers are dissolved in the GBL electrolyte, thereby reducing the density of the porous film. Use of a porous film containing polylactic acid fibers has advantages such as reduction in breakage during the separator manufacturing process, thereby improving productivity, improvement in handling ability during an element winding process for aluminum electrolytic capacitors, etc. due to having excellent strength in comparison to the case of using a porous film made by dissolving and removing the polylactic acid fibers beforehand and making the resulting film less dense.

In comparison to the aluminum electrolytic capacitor using the porous film having a thickness of 29.6 pm, density of 0.11 g/cm$^3$, and an average pore size of 4.77 $\mu$m obtained in Working Example 2, the aluminum electrolytic capacitor using the porous film having a thickness of 31.4 pm, density of 0.09 g/cm$^3$, and an average pore size of 5.48 pm obtained in Comparative Example 1 has greater deterioration in only percent defective but with hardly any change in impedance. Since the porous film of Working Example 2 has a sufficiently small density and the separator has little influence on the aluminum electrolytic capacitor, decrease in impedance of the aluminum electrolytic capacitor is little even if the density is further reduced.

Meanwhile, since minuteness of the porous film decreases greatly when density drops below 0.10 g/cm³ or the average pore size exceeds 5 μm, the short-circuit resistance characteristics as a separator has decreased and the percent defective of the aluminum electrolytic capacitor has increased significantly.

In comparison to the aluminum electrolytic capacitors using the papers for electrolytic capacitor of Conventional Examples 1 and 2, the aluminum electrolytic capacitor using the porous cellulose film obtained in Reference Example 1 has lower impedance and lower percent defective. On the other hand, while the porous film obtained in Working Example 2 has nearly the same thickness and density as the porous cellulose film obtained in Reference Example 1, the aluminum electrolytic capacitor using the porous film obtained in Working Example 2 has resulted in lower impedance and lower percent defective than those of the aluminum electrolytic capacitor using the porous cellulose film obtained in Reference Example 1.

Since the porous film obtained in Working Example 2 contains 50% by weight fibrous components, it has a slightly rougher structure with fewer regenerated cellulose components, in comparison to the porous cellulose film obtained in Reference Example 1, and the impedance of the aluminum electrolytic capacitor tends to be lower.

In comparison to the porous cellulose film obtained in Reference Example 1, the porous film obtained in Working Example 2 has a larger average pore size due to slightly poorer minuteness. On the other hand, since the fibrous component (B) in the porous film obtained in Working Example 2 has higher rigidity than that of the regenerated cellulose (A), when incorporated as a separator in the aluminum electrolytic capacitor, the porous film obtained in Working Example 2 has better capability of securing anode-cathode distance between the anode aluminum foil and the cathode aluminum foil than that of the porous cellulose film obtained in Reference Example 1. Therefore, even when stress is applied to a tab part when manufacturing an aluminum electrolytic capacitor, anode-cathode distance can be secured and short-circuit in the aluminum electrolyte capacitor can be prevented.

According to the above, the porous film obtained in Working Example 2 has slightly poorer minuteness as a stand-alone separator than that of the porous cellulose film obtained in Reference Example 1; however, it actually has the same or slightly better overall short-circuit characteristics when used as a separator for an aluminum electrolytic capacitor.

Measurement results of capacitance measured at 120 Hz and impedance measured at 100 kHz of the aluminum electrolytic capacitors using the porous films obtained in Working Examples 1 to 7, the porous film obtained in Comparative Example 2, and the papers for electrolytic capacitor obtained in Conventional Examples 1 and 2 are given in FIG. 2.

While the thickness of the porous film obtained in Working Example 1 is 29.8 μm, thickness of the paper for electrolytic capacitor obtained in Conventional Example 1 is 48.7 μm. Change from use of the paper for electrolytic capacitor obtained in Conventional Example 1 to the porous film obtained in Working Example 1 provides a significantly thinner separator. Therefore, as illustrated in FIG. 2, the aluminum electrolytic capacitor using the porous film obtained in Working Example 1 has an approximately 17% increase in capacitance than the aluminum electrolytic capacitor using the paper obtained in Conventional Example 1. In light of the verification in FIG. 1, changing from use of the paper for electrolytic capacitor of Conventional Example 1 to the porous film of Working Example 1 as the separator allows reduction in percent defective and impedance, and improvement in capacitance at the same time.

Even the aluminum electrolytic capacitors using the porous films obtained in Working Examples 2 to 7 have showed increase in capacitance in comparison to the papers for electrolytic capacitor obtained in Conventional Examples 1 and 2. In particular, the capacitance of the aluminum electrolytic capacitor using the porous film obtained in Working Example 5 has increased approximately 55% more than the capacitance of aluminum electrolytic capacitor using the paper for electrolytic capacitor obtained in Conventional Example 1.

While the porous film obtained in Working Example 5 has a high density of 0.89 g/cm³, and thus the impedance of the aluminum electrolytic capacitor tends to be relatively high, since the thickness is 3.1 μm, which is thin, area of electrode foils of the same sized aluminum electrolytic capacitor may be increased, so as to significantly increase capacitance.

Using the porous film obtained in Working Example 8, the paper for electrolytic capacitor obtained in Conventional Example 3, and the porous polyolefin film of Reference Example 2, one thousand 63 WV aluminum electrolytic capacitors using GBL electrolyte are constructed, and percent defective, impedance (at 100 kHz) and capacitance are measured.

The physical properties of the porous film obtained in Working Example 8, the paper for electrolytic capacitor obtained in Conventional Example 3, and the porous polyolefin film of Reference Example 2, and workability when manufacturing capacitor elements and evaluation results of the aluminum electrolytic capacitors are given in Table 3.

[Table 3]

Table 3
63 WV capacitor

| | Separator characteristics | | | | | | Workability when manufacturing element | Capacitor characteristics | | |
|---|---|---|---|---|---|---|---|---|---|---|
| | Thickness | Basis weight | Density | Average pore size | Content of Chlorine | Hydrosulfate content | | Percent defective | Impedance | Capacitance |
| | $\mu$m | g/m$^2$ | g/cm$^3$ | $\mu$m | ppm | ppm | | % (1000 units) | $\Omega$/100 kHz | $\mu$F |
| Working Example 8 | 25.0 | 10.8 | 0.43 | 0.26 | 1.6 | 4.9 | ○ | 0.0 | 0.161 | 120 |
| Conventional Example 3 | 24.5 | 10.8 | 0.44 | 0.53 | 0.4 | 0.7 | ○ | 0.7 | 0.162 | 120 |
| Reference Example 2 | 27.0 | 12.7 | 0.47 | 0.12 | 0.3 | 0.6 | ○ | 0.0 | 0.314 | 105 |

**EP 3 086 338 A1**

The porous film obtained in Working Example 8 has nearly the same thickness, basis weight, and density as the paper for electrolytic capacitor of Comparative Example 3. However, since the porous film has a very dense structure made of regenerated cellulose having a small diameter and PET fibers having a 0.7 μm fiber diameter, the average pore size is half or less than the paper for electrolytic capacitor of Conventional Example 3. Therefore, while the percent defective of the aluminum electrolytic capacitor using the paper for electrolytic capacitor of Conventional Example 3 is 0.7%, percent defective of the aluminum electrolytic capacitor using the porous film obtained in Working Example 8 is 0%. Changing from use of the paper for electrolytic capacitor to the porous film having the same thickness, basis weight and density allows considerable reduction in percent defective.

On the other hand, the aluminum electrolytic capacitor using the porous polyolefin film of Reference Example 2 as a separator has an impedance of 0.314Ω, which has deteriorated significantly in comparison to Conventional Example 3. This is considered to be caused by the small average pore size of the porous polyolefin film of Reference Example 2.

Moreover, while the thickness of the separator of Reference Example 2 is nearly the same as that of Working Example 8, the capacitance of the aluminum electrolytic capacitor of Reference Example 2 has decreased to 87.5% in comparison to Working. Example 8. The cause of this is considered to be that the electrolyte cannot cover the entire surface of the oxide film of the anode aluminum foil since the retention of electrolyte is low, and thus the effective electrode area is small. Since the capacitance of the aluminum electrolytic capacitor has been confirmed small in the initial evaluation, there is a high possibility that the reducing speed of the capacitance becomes faster compared to a cellulose separator over long time use. According to the above, the porous polyolefin film is unsuitable as a separator for aluminum electrolytic capacitors.

On the other hand, since the porous film made of the regenerated cellulose (A) and the fibrous component (B) of this embodiment has excellent electrolyte retaining capability, a sufficient amount of electrolyte can be maintained even when using synthetic fibers or inorganic fibers having low electrolyte retaining power as the fibrous component (B).

Using the porous film obtained in Working Example 9 and the papers for electrolytic capacitor obtained in Conventional Example 4 and Reference Example 3, one thousand 450 WV aluminum electrolytic capacitors using GBL electrolyte are constructed, and percent defective, impedance (at 100 kHz) and capacitance are measured.

The physical properties of the porous film obtained in Working Example 9 and the papers for electrolytic capacitor obtained in Conventional Example 4 and Reference Example 3, and workability when manufacturing capacitor elements and evaluation results of the aluminum electrolytic capacitors are given in Table 4.

[Table 4]

Table 4
450 WV GBL capacitor

| | Separator characteristics | | | | | | Workability when manufacturing element | Capacitor characteristics | | |
| | Thickness | Basis weight | Density | Average pore size | Content of Chlorine | Hydrosulfate content | | Percent defective | Impedance | Capacitance |
| | μm | g/m² | g/cm³ | μm | ppm | ppm | | % (1000 units) | Ω/100 kHz | μF |
| Working Example 9 | 61.4 | 35.3 | 0.57 | 0.38 | 1.7 | 8.8 | ○ | 0.2 | 23.85 | 1.3 |
| Conventional Example 4 | 90.6 | 55.3 | 0.61 | 3.27 | 0.5 | 0.9 | ○ | 0.6 | 40.15 | 1.0 |
| Reference Example 3 | 60.7 | 37.0 | 0.61 | 5.09 | 0.7 | 0.3 | ○ | 21.8 | 31.09 | 1.3 |

Changing of the separator from the paper for electrolytic capacitor obtained in Conventional Example 4 to the porous film obtained in Working Example 9 allows reduction in percent defective and impedance, and improvement in capacitance of the aluminum electrolytic capacitor at the same time. While the paper for electrolytic capacitor of Conventional Example 4 is 90 $\mu$m in thickness, the paper for electrolytic capacitor of Reference Example 3 has the same thickness as that of the porous film obtained in Working Example 9, that is, 60 $\mu$m in thickness.

When the separator is changed from the paper for electrolytic capacitor of Conventional Example 4 to the paper for electrolytic capacitor of Reference Example 3, the impedance is lowered, the capacitance is improved, and the percent defective is degraded up to 21.8%. When the separator is exchanged from paper for electrolytic capacitor to a thinner paper for electrolytic capacitor, the percent defective of the aluminum electrolytic capacitor is significantly degraded; however, since the porous film obtained in Working Example 9 has a smaller average pore size than that of the paper for electrolytic capacitor obtained in Conventional Example 4, the percent defective does not decrease even if the thickness is made thinner.

Using the porous films obtained in Working Examples 10 and 11, the porous films obtained in Comparative Examples 3 to 6, and the papers for electrolytic capacitor obtained in Conventional Example 5 and Reference Example 4, one thousand 450 WV aluminum electrolytic capacitors using ethylene glycol (EG) electrolyte are constructed, and percent defective, impedance (at 1 kHz) and capacitance are measured.

The physical properties of the porous films obtained in Working Examples 10 and 11, the porous films obtained in Comparative Examples 3 to 6 and the papers for electrolytic capacitor obtained in Conventional Example 5 and Reference Example 4, and workability when manufacturing capacitor elements and evaluation results of the aluminum electrolytic capacitors are given in Table 5.

[Table 5]

**Table 5**
**450 WV EG capacitor**

| | Separator characteristics | | | | | | Workability when manufacturing element | Capacitor characteristics | | |
|---|---|---|---|---|---|---|---|---|---|---|
| | Thickness | Basis weight | Density | Average pore size | Content of Chlorine | Hydrosulfate content | | Percent defective | Impedance | Capacitance |
| | $\mu m$ | $g/m^2$ | $g/cm^3$ | $\mu m$ | ppm | ppm | | % (1000 units) | $\Omega$/100 kHz | $\mu F$ |
| Working Example 10 | 67.2 | 45.0 | 0.67 | 0.13 | 0.9 | 2.2 | ○ | 0.0 | 29.12 | 4.5 |
| Working Example 11 | 25.1 | 23.3 | 0.93 | 0.05 | 1.4 | 7.6 | ○ | 0.2 | 20.28 | 6.3 |
| Comparative Example 3 | 71.5 | 48.6 | 0.68 | 0.12 | 0.9 | 1.1 | ○ | 0.0 | 34.45 | 4.4 |
| Comparative Example 4 | 31.2 | 24.6 | 0.79 | 0.16 | 2.3 | 6.3 | ○ | 43.8 | - | - |
| Comparative Example 5 | 28.9 | 22.3 | 0.77 | 0.18 | 1.5 | 10.8 | ○ | 29.5 | - | - |
| Comparative Example 6 | 29.7 | 24.7 | 0.83 | 0.15 | 5.4 | 37.1 | ○ | 100 | - | - |
| Conventional Example 5 | 61.1 | 45.8 | 0.75 | - | 0.6 | 6.4 | ○ | 0.2 | 38.80 | 4.7 |
| Reference Example 4 | 20.4 | 17.3 | 0.85 | - | 0.8 | 8.9 | ○ | 30.3 | 22.12 | 6.6 |

Since the porous film obtained in Comparative Example 4 has a chlorine content of 2.3 ppm, which is high, 43.8% of the aluminum electrolytic capacitors are found defective in the step after aging. Since the porous film obtained in Comparative Example 5 has a hydrosulfate content of 10.8 ppm, which is high, 29.5% of the aluminum electrolytic capacitors are found defective in the step after aging. When the content of chlorine of the porous film exceeds 2 ppm or the hydrosulfate content exceeds 10 ppm, the percent defective of the aluminum electrolytic capacitor increases.

Since the porous film in Comparative Example 6 made by a viscose method has high content of chlorine and hydrosulfate content, all of the capacitors are found defective in the step after aging. The porous film made by the viscose method is unsuitable for the porous films of this embodiment.

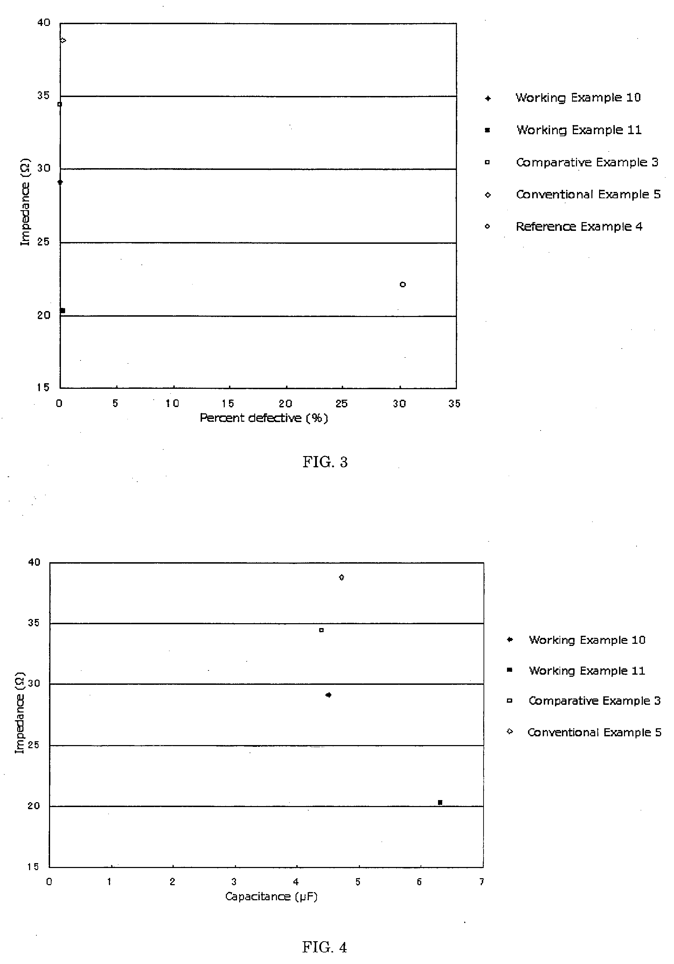

Measurement results of the impedance measured at 1 kHz and percent defective after aging of the aluminum electrolytic capacitors using the porous films obtained in Working Examples 10 to 11, the porous film obtained in Comparative Example 3, and the papers for electrolytic capacitor obtained in Conventional Example 5 and Reference Example 4 are given in FIG. 3.

The percent defective of the aluminum electrolytic capacitor using the paper for electrolytic capacitor of Conventional Example 5 is 0.2% and the impedance is 38.80 Ω. When the separator has been changed to the paper for electrolytic capacitor obtained in Reference Example 4 for the purpose of decreasing the impedance, the impedance has decreased to 22.12Ω but the percent defective has deteriorated to 30.3%.

Changing of the separator from the paper for electrolytic capacitor obtained in Working Example 5 to the porous film obtained in Working Example 10 allows 0% percent defective of the aluminum electrolytic capacitor as well as significant reduction in the impedance at the same time. Moreover, changing of the separator from the paper for electrolytic capacitor obtained in Conventional Example 5 to the porous film obtained in Working Example 11 allows maintaining of the percent defective of the aluminum electrolytic capacitor as well as nearly reduction by half of the impedance at the same time.

Measurement results of capacitance measured at 120 Hz and impedance measured at 1 kHz of the aluminum electrolytic capacitors using the porous films obtained in Working Examples 10 and 11, the porous film obtained in Comparative Example 3, and the paper for electrolytic capacitor obtained in Conventional Example 5 are given in FIG. 4.

Changing from the paper for electrolytic capacitor obtained in Conventional Example 5 having a thickness of 61.1 $\mu$m to the porous film obtained in Working Example 11 having a thickness of 25.1 $\mu$m has increased the capacitance of the aluminum electrolytic capacitor by approximately 34%. Changing of the separator from the paper for electrolytic capacitor obtained in Conventional Example 5 to the porous film obtained in Working Example 11 allows reduction by half of the impedance and increase in the capacitance at the same time while maintaining the percent defective of the aluminum electrolytic capacitor.

Thickness of the porous film obtained in Comparative Example 3 is 71.5 $\mu$m. Comparing the aluminum electrolytic capacitor using the porous film obtained in Comparative Example 3 to the aluminum electrolytic capacitor using the porous film obtained in Working Example 10 having a thickness of 67.2 $\mu$m, the impedance has deteriorated significantly in addition to decrease in the capacitance. It is considered that a thickness exceeding 70 $\mu$m and increase in anode-cathode distance between the anode aluminum foil and the cathode aluminum foil have significant effects. Since impedance characteristics of the aluminum electrolytic capacitor deteriorate easily when the thickness exceeds 70 $\mu$m, it is favorable to make the thickness of the porous film 70 $\mu$m or less.

As is evident from this embodiment and working examples, by making a porous film made of the regenerated cellulose (A) and the fibrous component (B) using an amine oxide cellulose solution, a porous film having an extremely small sulfate radical content that corrodes the oxide film of the anode aluminum foil of the aluminum electrolytic capacitor can be obtained.

Moreover, by using TCF bleached or unbleached cellulose as the cellulose to be dissolved, a porous film having an extremely small content of chlorine that corrodes the oxide film of the anode aluminum foil in a similar manner to the sulfate radicals can be obtained.

A porous film of the present invention made of the regenerated cellulose (A) and the fibrous component (B) has hydrophilic properties and lipophilic properties as well as excellent electric insulation, which is a characteristic of cellulose, and its thickness and density can be arbitrarily controlled. This allows provision of a separator having properties that are difficult to achieve with paper for electrolytic capacitor, which is a mat of fibers. Use of the porous film of the present invention that does not contain any matter that corrodes the oxide film of the anode aluminum foil allows provision of a separator for an aluminum electrolytic capacitor capable of down sizing and/or capacity enlargement and/or impedance reduction of an aluminum electrolytic capacitor that was impossible with paper for electrolytic capacitor or a conventional porous cellulose film, and also provision of an aluminum electrolytic capacitor using said separator.

Since viscosity of the amine oxide cellulose solution can be controlled by setting the cellulose soluble in the amine oxide to an arbitrary ratio, a porous film may be made using cellulose having a high degree of polymerization according to this embodiment. As a result, a highly strong porous film having excellent resistance against the electrolyte and a high degree of polymerization can be made.

The porous film of this embodiment is thinner than paper for electrolytic capacitor, allowing construction of a less dense separator. In the paper making process, most of the strength of the paper in a wet state before drying is dependant on physical intertwining of fibers, thereby increasing the possibility of generation of breaks in the paper if the number of overlapped fibers is reduced in order to make thin paper.

Moreover, since the porous film of this embodiment is made by forming in a film form an amine oxide cellulose solution containing the fibrous component (B) and regenerating the cellulose in a coagulation bath, a thinner sheet can be made than by the paper making method. It is also possible to make a porous film having excellent strength characteristics due to containing the fibrous component (B) and having a thickness of 5 $\mu$m or less which cannot be made with a porous film made of only regenerated cellulose.

Since the density of the porous film of this embodiment can be controlled at an arbitrary ratio by a method for making a film porous or through adjustment of conditions, a separator having a density of 0.25 g/cm$^3$ or less, which is difficult to achieve with paper, can be obtained.

Paper for electrolytic capacitor is a collective of pulp bonded by physical intertwining of individual pulp and hydrogen bonding at contact points. In contrast to this, the porous film of the present invention is a unified body of the regenerated cellulose (A) and the fibrous component (B). Therefore, even in a low density region such as 0.10 to 0.25 g/cm$^3$, sufficient strength such that the paper does not break during the process of constructing the capacitor element can be secured. A separator having high strength, low impedance, and excellent short-circuit resistance characteristics even in the density region of 0.25 to 1.00 g/cm$^3$ of paper for electrolytic capacitor that is generally used can be implemented.

The porous film of this embodiment has excellent short-circuit resistance characteristics due to a microporous and dense configuration. Moreover, use of fibrous components having higher rigidity than regenerated cellulose allows improvement in capability of securing anode-cathode distance between the anode aluminum foil and the cathode aluminum foil when incorporated in an aluminum electrolytic capacitor.

As a result, while it has slightly poorer minuteness than the porous film made of only regenerated cellulose, a separator having the same level of excellent short-circuit resistance characteristics may be provided. Furthermore, since cellulose has excellent electrolyte retention, even in the case of using synthetic fibers or inorganic fibers having little electrolyte retention as the fibrous component (B), sufficient quantity of electrolyte can be retained.

Since the porous film of this embodiment has dense structure and excellent short-circuit resistance characteristics, a less dense or thinner separator may be used in the case of exchanging a separator of an aluminum electrolytic capacitor from the paper for electrolytic capacitor to the porous film. Therefore, down sizing, capacity enlargement, impedance reduction, longer operating life, etc. of the aluminum electrolytic capacitor can be implemented. Note that the porous film may be used independently or it may be used in combination with another separator such as paper for electrolytic capacitor.

The porous film of this embodiment is available not only as a separator for aluminum electrolytic capacitors, but also as a separator for various storage devices such as a separator for conductive polymer aluminum electrolytic capacitors, a separator for electric double-layer capacitors, a separator for lithium-ion capacitors, a separator for lithium-ion batteries, a separator for alkaline-manganese batteries and the like, and is also available as various filters.

When it is used as a separator for lithium-ion batteries, use of fibrous components made of resin that melts under thermal runaway temperatures of batteries allows contribution to a shutdown effect by blocking holes in the separator when the temperature in the battery increases above a certain temperature due to some abnormality, and increasing internal resistance of the battery so as to improve safety.

According to this embodiment described above, use of a porous film made of the regenerated cellulose (A) and the fibrous component (B) as a separator allows provision of a separator for aluminum electrolytic capacitors that has implemented down sizing, capacity enlargement, impedance reduction, longer operating life, etc. of the capacitor, and also allows provision of an aluminum electrolytic capacitor using said separator.

**Claims**

1. A separator for a capacitor interleaved between an anode and a cathode of a capacitor and used for preventing a short circuit and impregnating and retaining electrolyte for driving, wherein said separator comprises a porous film made of regenerated cellulose (A) dissolved and regenerated without forming a cellulose derivative and a fibrous component (B).

2. The separator for the capacitor according to claim 1, wherein the fibrous component (B) comprises one or more kinds of fibers selected from the group consisting of a plant-based pulp, regenerated cellulose fiber, cellulose fiber, animal fiber, inorganic fiber, and synthetic fiber that are available as paper raw material.

3. The separator for the capacitor according to claim 1 or 2, wherein said separator comprises a porous film having 2 ppm or less in content of chlorine, 10 ppm or less in content of hydrosulfate, 3 to 70 $\mu$m in thickness, 0.1 g/cm$^3$ or

greater in density, and 5 μm or less in average pore size.

4. The separator for the capacitor according to any one of claims 1 to 3, wherein said separator comprises a porous film including the regenerated cellulose (A) obtained by forming in a film form a cellulose solution made by dissolving cellulose in an amine oxide solvent, immersing the resulting cellulose solution in water or a poor solvent of the amine oxide solvent so as to coagulate and regenerate the cellulose, washing the regenerated cellulose with water to remove the amine oxide solvent, and drying the resulting cellulose.

5. The separator for the capacitor according to any one of claims 1 to 4, wherein a main component of the amine oxide solvent is N-methylmorpholine N-oxide.

6. The separator for the capacitor according to any one of claims 1 to 5, wherein said separator comprises a porous film obtained by forming in a film form a cellulose solution made by mixing the fibrous component (B), and regenerating the cellulose.

7. A capacitor using the separator according to any one of claims 1 to 6.

8. The capacitor according to claim 7, wherein said capacitor includes an aluminum electrolyte capacitor, an electric double-layer capacitor, or a lithium-ion capacitor.

FIG. 1

FIG. 2

FIG. 3

FIG. 4

## INTERNATIONAL SEARCH REPORT

| International application No. |
| --- |
| PCT/JP2013/084075 |

A.  CLASSIFICATION OF SUBJECT MATTER
*H01G11/52*(2013.01)i, *H01G9/02*(2006.01)i, *H01G11/84*(2013.01)i

According to International Patent Classification (IPC) or to both national classification and IPC

B.  FIELDS SEARCHED

Minimum documentation searched (classification system followed by classification symbols)
H01G11/52, H01G9/02, H01G11/84

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y | WO 2013/69146 A1  (Nippon Kodoshi Corp.), 16 May 2013 (16.05.2013), entire text (Family: none) | 1-8 |
| Y | JP 2000-507737 A  (Courtaulds Fibers (Hodings) Ltd.), 20 June 2000 (20.06.2000), entire text & US 6258488 B1        & GB 9606914 A0 & EP 891640 A | 1-8 |

☐   Further documents are listed in the continuation of Box C.    ☐   See patent family annex.

| | |
| --- | --- |
| *   Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| 20 March, 2014 (20.03.14) | 01 April, 2014 (01.04.14) |

| Name and mailing address of the ISA/<br>    Japanese Patent Office | Authorized officer |
| --- | --- |
| Facsimile No. | Telephone No. |

Form PCT/ISA/210 (second sheet) (July 2009)

EP 3 086 338 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H5267103 A
- JP H103898 A
- JP H1186827 A
- JP 2007141498 A
- WO 2008139619A A
- WO 2008542560A A
- WO 2009508015A A

**Non-patent literature cited in the description**

- Dissolution of cellulose in alkaline-urea solvent and regenerative gelatinization thereof. *CAI Jie Cellulose Communications,* 2008, vol. 15 (2